(19) Europäisches Patentamt
European Patent Office
Office européen des brevets

(11) Numéro de publication : **0 187 574 B1**

(12) # FASCICULE DE BREVET EUROPÉEN

(45) Date de publication du fascicule du brevet : **11.10.89**

(51) Int. Cl.$^4$ : **C 03 C 3/04**

(21) Numéro de dépôt : **85402405.6**

(22) Date de dépôt : **04.12.85**

(54) **Nouvelles compositions verrières réaffinables et procédé pour leur obtention.**

(30) Priorité : **07.12.84 FR 8418699**

(43) Date de publication de la demande : **16.07.86 Bulletin 86/29**

(45) Mention de la délivrance du brevet : **11.10.89 Bulletin 89/41**

(84) Etats contractants désignés : **AT CH DE FR GB IT LI LU NL SE**

(56) Documents cités :
**EP--A-- 0 015 794**
**EP--A-- 0 044 236**
**FR--A-- 2 519 330**
**FR--A-- 2 523 115**
**Glass Technology, Vol. 25, No. 2, April 1984, D.M. Krol et P.J. Rommers:"Oxidation-reduction behavioùr of antimony in silicate glasses prepared from raw materials and cullet"**

(73) Titulaire : **RHONE-POULENC CHIMIE**
**25, quai Paul Doumer**
**F-92408 Courbevoie Cedex (FR)**

(72) Inventeur : **Richard, Christian**
**28, avenue du Général Leclerc**
**F-58500 Clamecy (FR)**

(74) Mandataire : **Dubruc, Philippe et al**
**RHONE-POULENC INTERSERVICES Service Brevets Chimie 25, quai Paul-Doumer**
**F-92408 Courbevoie Cedex (FR)**

EP 0 187 574 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention a pour objet un procédé de préparation et d'affinage d'une composition verrière.

On sait qu'une étape importante de la transformation des composés verriers, en vue de leur vitrification, est constituée par l'opération d'affinage.

Cette étape est conditionnée notamment par « l'histoire thermique » des composés verriers.

Les travaux de la demanderesse ont également mis en évidence que cette opération était influencée par « l'histoire physico-chimique » des composés et qu'elle pouvait être améliorée en faisant appel à un processus par voie chimique selon lequel, lors de la précipitation d'un composé verrier, on détermine d'abord le rapport molaire $SiO_2/MeO$ du silicate de départ (ou sel d'oxyde formateur de départ), en fonction de la composition finale du composé verrier, ce rapport devant être égal à celui du rapport de l'oxyde formateur, aux oxydes des sels entrant dans la composition finale, de sorte à permettre une substitution de l'oxyde fondant par les oxydes modificateurs ou autres (EP 15 794).

Ceci revient à apporter l'oxyde formateur ($SiO_2$ par exemple) sous forme soluble.

Ce procédé peut être mis en œuvre en faisant appel à un milieu organique (EP 44 236).

Ce même document décrit plus particulièrement un procédé de préparation d'une composition vitrifiable comprenant un affinant et dans lequel la composition est fondue et affinée en une seule fois pour donner un verre. Toutefois, cette référence ne contient aucune indication sur l'utilisation d'une telle composition dans un procédé de type industriel mettant en œuvre de multiples cycles de fusion et d'affinage.

Toujours d'après la même référence, on a aussi observé que l'opération de fusion affinage pouvait être effectuée à des viscosités élevées, c'est-à-dire à des températures plus faibles (EP 44 236).

Or l'on sait que généralement un four de fusion comporte une zone de fusion et d'affinage à haute température et une zone de conditionnement à plus basse température, dite encore zone de braise ou de travail dans laquelle s'effectue le cueillage.

Dans le FR 2 523 115 la demanderesse a revendiqué de travailler à des températures sensiblement égales dans les deux zones. L'on comprend l'importance d'une telle manière de procéder lorsque l'on sait que se produit dans la zone de fusion une série de fusion, dissolution, volatilisation et réactions de type redox entre les matières et que l'on sait qu'élever la température de fusion facilite la dissolution et sert à compenser les dérives mineures d'alimentation. Par ailleurs les problèmes d'hétérogénéité que pose ce processus de transformation conduisent à des dispositifs sophistiqués et à des temps de travail longs qui s'ajoutent à l'inconvénient des températures élevées.

La demanderesse a observé que, de manière inattendue l'on pouvait obtenir des composés vitrifiés réaffinables.

Selon l'invention pratiquement on prépare une composition verrière qui comprend :

un système affinant

un composé verrier précipité

et l'on fait subir à la composition renfermant le système affinant et le composé verrier précipité un traitement thermique à une température qui permette la fusion et l'affinage de la composition et le maintien de l'activité chimique du système affinant.

Avantageusement la température de fusion et d'affinage est égale à la température à laquelle la perte en poids par volatilisation du composé précipité est négligeable, notamment par rapport au métal modificateur. Cette température peut en particulier correspondre à la température de l'opération de conditionnement.

Plus précisément, selon une première variante, le procédé selon l'invention de préparation et d'affinage d'une composition verrière, à base d'un système affinant, d'oxydes formateurs et d'autres oxydes fondants et modificateurs, est un procédé comprenant les étapes suivantes de préparation d'une composition vitrifiable :

a) on prépare une première solution alcaline des sels d'oxydes formateurs et une seconde solution renfermant les sels solubles des autres oxydes,

b) on fait réagir les deux solutions de manière à former une suspension de sels d'oxydes correspondant au composé vitrifiable que l'on veut obtenir, la solution alcaline précitée présentant un rapport molaire oxydes formateurs/oxydes alcalins égal au rapport

$$Rm = \frac{\text{Concentration molaire exprimée en oxyde formateur}}{\text{somme des concentrations molaires exprimées en oxydes fondants et modificateurs dans le composé vitrifiable}}$$

c) le procédé comprenant une étape d'addition du système affinant et en outre

d) une étape dans laquelle on fait subir à la composition vitrifiable renfermant le système affinant un traitement thermique à une température qui permet sa fusion, son affinage et l'obtention de la

composition verrière précitée, et ce procédé est caractérisé en ce qu'on soumet ladite composition vitrifiable à plusieurs traitements thermiques d'affinage sans ajout supplémentaire de système affinant à ladite composition.

De façon inattendue, on a observé que la composition verrière peut subir plusieurs opérations répétées d'affinage.

Ceci est d'un intérêt considérable puisque l'on peut obtenir des produits susceptibles d'être transformés à la manière des matières plastiques.

Par ailleurs ces produits peuvent contenir des additifs divers selon l'application à laquelle ils sont destinés.

Selon une variante de réalisation, ces additifs peuvent être rajoutés lors de la transformation. L'affinant utilisé est notamment du groupe des oxydes de Sb, As et Ce et est avantageusement associé à un nitrate, constituant ainsi le système affinant.

Le composé verrier, mis en œuvre dans la composition, est notamment préparé selon un procédé revendiqué selon l'un des brevets européens 15 594 ou 44 236.

Selon une autre variante de l'invention, le procédé de préparation et d'affinage d'une composition verrière comprend les étapes suivantes de préparation d'une composition vitrifiable :

a) on forme un silicate de métal alcalin ou d'ammonium,

b) on forme un sel soluble d'au moins un oxyde métallique MeO du groupe Pb, Ca, Ba, Zn, Mg,

c) on fait réagir le silicate de métal alcalin et le sel obtenu à l'étape b), de manière à précipiter un silicate métallique d'un métal du groupe Pb, Ca, Ba, Zn, Mg,

d) on met en suspension le silicate ainsi obtenu à l'étape c) dans une solution de silicate, de métal alcalin,

les rapports molaires $SiO_2$/MeO et $SiO_2$/oxyde de métal alcalin des silicates utilisés dans l'étape d) étant les mêmes et la silice de la composition verrière étant amenée uniquement sous forme de silicates de métaux Me et alcalins,

e) le procédé comprenant en outre une étape d'addition d'un système affinant et

f) une étape dans laquelle on fait subir à la composition vitrifiable obtenue à la suite des étapes précédentes un traitement thermique à une température qui permet sa fusion, son affinage et l'obtention de la composition verrière précitée, et ce procédé est caractérisé en ce qu'on soumet ladite composition vitrifiable à plusieurs traitements thermiques d'affinage sans ajout supplémentaire de système affinant à ladite composition.

Le concept de l'invention s'étend également au cas où sont présents d'autres oxydes formateurs tels que $B_2O_3$, $P_2O_5$ ou $Al_2O_3$.

On fait appel, soit à des solutions alcalines : borate de sodium, phosphate de sodium ou aluminate de sodium, soit à l'addition sous forme acide en solution de l'acide borique ou phosphorique.

Avantageusement le sel soluble obtenu à l'étape b est un nitrate.

En ce qui concerne l'alumine, sa forme acide n'étant pas soluble, on peut faire appel au nitrate d'aluminium soluble dans l'eau.

Divers additifs peuvent être également introduits lors de la préparation desdits composés verriers sous forme de sels d'oxydes et notamment de silicates pour les composés à base de silices tels que sels ferreux, ferriques, de cobalt, de nickel, de cuivre, de chrome, de sélénium, de terres rares et de manganèse, lanthane et cérium.

Par ailleurs, il va de soi que ces composés peuvent renfermer plusieurs métaux alcalins, notamment Na et K et plusieurs métaux d'oxydes formateurs et modificateurs.

Selon l'invention, on peut, en particulier, jouer sur la nature et la proportion des sels d'oxydes alcalins afin de modifier le temps et la température de l'opération d'affinage.

Enfin, selon une troisième variante de l'invention, le procédé de préparation et d'affinage d'une composition verrière comprend les étapes suivantes :

a) on fait réagir une solution aqueuse d'un silicate de métal alcalin et une solution d'un sel d'au moins un autre métal en présence d'un liquide organique polaire miscible, de façon à former une suspension d'un silicate dans le liquide organique,

b) on sépare la suspension du liquide organique ce par quoi on obtient un composé vitrifiable précipité,

c) le procédé comportant en outre la préparation d'un mélange comprenant ledit composé précipité et un système affinant, et

d) la fusion et l'affinage par un traitement thermique dudit mélange pour obtenir la composition verrière précitée ; et ce procédé est caractérisé en ce qu'on soumet ledit mélange à plusieurs traitements thermiques d'affinage sans ajout supplémentaire de système affinant audit mélange.

Ce procédé peut être mis en œuvre en réalisant un solution organique d'un sel d'au moins un autre métal à laquelle on ajoute la solution de silicate(s) alcalin(s).

Le liquide organique polaire peut aussi être apporté directement à la solution de silicate(s).

Avantageusement, le liquide organique polaire est constitué par du méthanol.

Eventuellement, la source de l'autre métal est constitué par une matière minérale naturelle.

Le produit obtenu peut être fondu et affiné dans un four électrique à voûte froide. Mais on ne sortirait pas du cadre de la présente invention en faisant appel à un autre moyen tel que dispositif à pulvérisation dés lors que la température de fusion du composé est atteinte.

Les compositions de l'invention permettent notamment des économies appréciables par le recyclage des rébuts (groisil), mais aussi de présenter des compositions prêtes à l'emploi qui peuvent être mises en œuvre dans des dispositifs aussi simples que ceux décrits dans le FR 2 523 115 ou dans tout dispositif de transformation à la manière des compositions (compounds) à base de matières plastiques.

Ces compositions permettent aussi de valoriser les procédés revendiqués dans les EP 15 794 et 44 236. Elles renferment notamment en poids :

10 à 90 % de métal formateur exprimé en oxyde
1 à 30 % de métal alcalin exprimé en oxyde
0, 1 à 10 % d'agent affinant exprimé en oxyde
8 à 50 % de métal modificateur exprimé en oxyde

Elles sont notamment constituées par des compositions verrières au plomb ou sodo-calciques, ou au bore.

Mais la présente invention sera plus aisément comprise à l'aide de l'exemple suivant donné à titre indicatif, mais nullement limitatif.

## Exemple

L'élément formateur est constitué par la silice.
L'élément fondant est le potassium.
L'élément modificateur est le plomb.

Composition du verre (en poids)

| | |
|---|---|
| $SiO_2$ | = 55 |
| $K_2O$ | = 12 |
| PbO | = 32,5 |
| $Sb_2O_3/Sb_2O_5$ | = 0,5 |

Afin d'oxyder $Sb_2O_3$ en $Sb_2O_5$, on amène une partie de $K_2O$ sous forme nitrate ($KNO_3$), soit environ 1 %. Ce nitrate est le sous-produit de la réaction de formation du composé chimique.

On calcule le rapport molaire du verre

$$Rm = \frac{55/60,08}{(12-1)/94,2 + 32,5/223,2} = 3\ 5$$

Pour fabriquer 1 000 Kg de verre, on prépare les solutions aqueuses suivantes :

a) 3 056 Kg de solution de silicate de potassium contenant 18 % de $SiO_2$ et 8,1 % de $K_2O$ (Rm = 3,5),
b) 1 608 Kg de solution de nitrate de plomb contenant 30 % de $Pb(NO_3)_2$

On ajoute dans un réacteur de 10 $m_3$ :

2 000 Kg de méthanol
1 608 Kg de solution de nitrate de plomb puis lentement sous agitation
3 056 Kg de solution de silicate de potassium diluée avec 133 Kg d'eau
50 Kg d'oxyde d'antimoine ($Sb_2O_3$).

On obtient ainsi une suspension très homogène que l'on filtre. On lave le précipité, de manière à laisser subsister la quantité de $KNO_3$ nécessaire au système affinant.

Le gâteau est ensuite séché, puis introduit dans un four à voûte froide, chauffé électriquement de manière à le porter à une température d'environ 1 200 °C. Le verre est ensuite refroidi brutalement à la sortie du four, par air ou par eau, pour obtenir des grains de verre de l'ordre de 1 mm.

Sur le produit ainsi préparé, affiné plusieurs fois à 1 200°C, 1, 2 et 3 fois, on a suivi la variation des teneurs en Si, Pb, Sb et K en fonction du nombre de cycles d'affinage (chaque cycle représentant une durée de 12 heures).

On remarque qu'il n'y a pas de variation des teneurs en $SiO_2$, PbO, $K_2O$ et $Sb_2O_3$, les valeurs trouvées correspondant à :

| | |
|---|---|
| $SiO_2$ | = 55 % |
| PbO | = 32,5 % |
| $K_2O$ | = 12 % |
| $Sb_2O_3$ | = 0,5 % |

Ces résultats, obtenus par fluorescence X dispersive sur perles sont donnés avec une précision relative de l'ordre de 2 %. On ne constate sur 4 cycles aucune perte des éléments contenus.

On retrouve la composition initiale dans le composé affiné.

Par ailleurs, on observe sur la courbe que le début de fusion se produit à 700 °C.

La demanderesse pense que ce comportement inattendu serait dû au fait que, à la température d'affinage selon l'invention, une majeure partie de l'antimoine resterait à l'état pentavalent.

## Revendications

1. Procédé de préparation et d'affinage d'une composition verrière, à base d'un système affinant, d'oxydes formateurs et d'autres oxydes fondants et modificateurs, procédé comprenant les étapes suivantes de préparation d'une composition vitrifiable :

a) on prépare une première solution alcaline des sels d'oxydes formateurs et une seconde solution renfermant les sels solubles des autres oxydes,

b) on fait réagir les deux solutions de manière à former une suspension de sels d'oxydes correspondant au composé vitrifiable que l'on veut obtenir, la solution alcaline précitée présentant un rapport molaire oxydes formateurs/oxydes alcalins égal au rapport

$$Rm = \frac{\text{Concentration molaire exprimée en oxyde formateur}}{\text{somme des concentrations molaires exprimées en oxydes fondants et modificateurs dans le composé vitrifiable}}$$

c) le procédé comprenant en outre une étape d'addition du système affinant et

d) une étape dans laquelle on fait subir à la composition vitrifiable renfermant le système affinant un traitement thermique à une température qui permet sa fusion, son affinage et l'obtention de la composition verrière précitée, procédé caractérisé en ce qu'on soumet ladite composition vitrifiable à plusieurs traitements thermiques d'affinage sans ajout supplémentaire de système affinant à ladite composition.

2. Procédé de préparation et d'affinage d'une composition verrière comprenant les étapes suivantes de préparation d'une composition vitrifiable :

a) on forme un silicate de métal alcalin ou d'ammonium,

b) on forme un sel soluble d'au moins un oxyde métallique MeO du groupe Pb, Ca, Ba, Zn, Mg,

c) on fait réagir le silicate de métal alcalin et le sel obtenu à l'étape b), de manière à précipiter un silicate métallique d'un métal du groupe Pb, Ca, Ba, Zn, Mg,

d) on met en suspension le silicate ainsi obtenu à l'étape c) dans une solution de silicate de métal alcalin,

les rapports molaires $SiO_2$/MeO et $SiO_2$/oxyde de métal alcalin des silicates utilisés dans l'étape d) étant les mêmes et la silice de la composition verrière étant amenée uniquement sous forme de silicates de métaux Me et alcalins,

e) le procédé comprenant en outre une étape d'addition d'un système affinant et

f) une étape dans laquelle on fait subir à la composition vitrifiable obtenue à la suite des étapes précédentes un traitement thermique à une température qui permet sa fusion, son affinage et l'obtention de la composition verrière précitée ; procédé caractérisé en ce qu'on soumet ladite composition vitrifiable à plusieurs traitements thermiques d'affinage sans ajout supplémentaire de système affinant à ladite composition.

3. Procédé de préparation et d'affinage d'une composition verrière comprenant les étapes suivantes :

a) on fait réagir une solution aqueuse d'un silicate de métal alcalin et une solution d'un sel d'au moins un autre métal en présence d'un liquide organique polaire miscible, de façon à former une suspension d'un silicate dans le liquide organique,

b) on sépare la suspension du liquide organique ce par quoi on obtient un composé vitrifiable précipité,

c) le procédé comportant en outre la préparation d'un mélange comprenant ledit composé précipité et un système affinant, et

d) la fusion et l'affinage par un traitement thermique dudit mélange pour obtenir la composition verrière précitée ; procédé caractérisé en ce qu'on soumet ledit mélange à plusieurs traitements thermiques d'affinage sans ajout supplémentaire de système affinant audit mélange.

## Claims

1. A process for preparing and fining a glass-making composition based on a fining system, formative oxides and other melting and modifier oxides, the process comprising the following steps for preparation of a vitrifiable composition :

a) preparing a first alkaline solution of the salts of formative oxides and a second solution containing the soluble salts of the other oxides,

b) reacting the two solutions so as to form a suspension of the salts of oxides corresponding to the vitrifiable compound which is to be produced, said alkaline solution having a formative oxides/alkaline oxides molar ratio equal to the ratio :

$$Rm = \frac{\text{Molar concentration expressed in terms of formative oxide}}{\text{total of the molar concentrations expressed in terms of melting and modifier oxides in the vitrifiable composition}}$$

c) the process further comprising a step of adding the fining system and

d) a step in which the vitrifiable composition containing the fining system is subjected to a heat treatment at a temperature which permits melting thereof, fining thereof and the production of said glass-making composition, the process being characterised in that said vitrifiable composition is subjected to a plurality of fining heat treatments without the supplementary addition of fining system to said composition.

2. A process for preparing and fining a glass-making composition comprising the following steps for the preparation of a vitrifiable composition :

a) forming a silicate of alkali metal or ammonium,

b) forming a soluble salt of at least one metallic oxide MeO of the group Pb, Ca, Ba, Zn and Mg,

c) reacting the alkali metal silicate and the salt obtained in step b) so as to precipitate a metallic silicate of a metal from the group Pb, Ca, Ba, Zn and Mg,

d) putting the silicate which is thus obtained in step c) into suspension in a solution of alkali metal silicate,

the $SiO_2$/MeO and $SiO_2$/alkali metal oxide molar ratios of the silicates used in step d) being the same and the silica of the glass-making composition being provided solely in the form of silicates of metals Me and alkali metals,

e) the process further comprising a step of adding a fining system and

f) a step in which the vitrifiable composition obtained following the preceding steps is subjected to a heat treatment at a temperature which permits melting thereof, fining thereof and the production of said glass-making composition ; the process being characterised in that said vitrifiable composition is subjected to a plurality of fining heat treatments without the supplementary addition of fining system to said composition.

3. A process for preparing and fining a glass-making composition comprising the following steps :

a) reacting an aqueous solution of an alkali metal silicate and a solution of a salt of at least one other metal in the presence of a miscible polar organic liquid so as to form a suspension of a silicate in the organic liquid,

b) separating the suspension from the organic liquid thereby obtaining a precipitated vitrifiable compound, and

c) the process further comprising the preparating of a mixture comprising said precipitated compound and a fining system, and

d) melting and fining by a heat treatment of said mixture to produce said glass-making composition ; the process being characterised in that said mixture is subjected to a plurality of fining heat treatments without the supplementary addition of fining system to said mixture.

## Patentansprüche

1. Verfahren zur Herstellung und zum Läutern einer Glasmasse auf der Grundlage eines Läuterungssystems, von Oxidbildnern und anderen schmelzenden Oxiden und Modifikatoren, umfassend die folgenden Stufen der Herstellung einer glasbildenden Masse :

a) man stellt eine erste alkalische Lösung von Salzen der Oxidbildner und eine zweite Lösung, enthaltend die löslichen Salze der anderen Oxide, her,

b) man bringt die beiden Lösungen so zur Reaktion, daß eine Suspension der Oxidsalze, entsprechend der glasbildenden Masse entsteht, die man erhalten möchte, wobei die oben erwähnte alkalische Lösung ein Molverhältnis von Oxidbildnern zu Alkalioxiden aufweist, entsprechend dem Verhältnis

$$Rm = \frac{\text{Molkonzentration der Oxidbildner}}{\text{Summe der Molkonzentrationen der schmelzenden Oxide und Modifizierungsmittel in der glasbildenden Masse}}$$

c) das Verfahren umfaßt unter anderem eine Stufe der Zugabe des Läuterungssystems und

d) eine Stufe, in der man an der glasbildenden Masse, enthaltend das Läuterungssystem, eine thermische Behandlung bei einer Temperatur vornimmt, die deren Schmelzen, die Läuterung und den Erhalt der oben erwähnten Glas-Masse erlaubt, wobei das Verfahren dadurch gekennzeichnet ist, daß man die erwähnte glasbildende Masse mehreren thermischen Läuterungsbehandlungen unterwirft ohne weitere Zugabe von Läuterungssystemen zu der erwähnten Masse.

2. Verfahren zur Herstellung und Läuterung einer Glas-Masse, umfassend die folgenden Stufen der Herstellung einer glasbildenden Masse :

a) man bildet ein Alkali- oder Ammoniumsilicat,

b) man bildet ein lösliches Salz mindestens eines Metalloxids MeO der Gruppe Pb, Ca, Ba, Zn, Mg,

c) man setzt das Silicat und das in Stufe b) erhaltene Salz so miteinander um, daß ein Metallsilicat eines Metalls der Gruppe Pb, Ca, Ba, Zn, Mg ausfällt,

d) man bringt das so in Stufe c) erhaltene Silicat in einer Lösung des Alkalimetallsilicats in Suspension,

wobei die Molverhältnisse $SiO_2$/MeO und $SiO_2$/Alkalimetalloxid der in Stufe d) angewandten Silicate gleich sind und das Silicium der glasbildenden Masse ein einziges Mal in Form der Silicate der Metalle Me und der Alkalimetalle zugeführt wird,

e) das Verfahren umfaßt unter anderem eine Stufe der Zugabe eines Läuterungssystems und

f) eine Stufe, in der man die glasbildende Masse, die durch die Reihe der vorgenannten Stufen erhalten worden ist, einer thermischen Behandlung bei einer Temperatur unterwirft, die deren Schmelzen, das Läutern und den Erhalt der oben erwähnten Glas-Masse erlaubt, wobei das Verfahren dadurch gekennzeichnet ist, daß man die erwähnte glasbildende Masse mehreren thermischen Läuterungsbehandlungen unterwirft ohne weiteres Läuterungssystem zu der Masse zuzusetzen.

3. Verfahren zur Herstellung und Läuterung einer Glas-Masse, umfassend die folgenden Stufen :

a) man läßt eine wässrige Lösung eines Alkalimetallsilicats und eine Lösung eines Salzes mindestens eines anderen Metalls in Gegenwart einer organischen polaren mischbaren Flüssigkeit miteinander so reagieren, daß sich eine Suspension eines Silicats in der organischen Flüssigkeit bildet,

b) man trennt die Suspension von der organischen Flüssigkeit ab, so daß man eine ausgefällte glasbildende Masse erhält,

c) das Verfahren umfaßt unter anderem die Herstellung eines Gemisches, enthaltend die ausgefällte Masse und ein Läuterungssystem und

d) das Schmelzen und Läutern durch thermische Behandlung dieses Gemisches, um die ausgefällte glasbildende Masse zu erhalten, wobei das Verfahren dadurch gekennzeichnet ist, daß man das Gemisch mehreren thermischen Läuterungsbehandlungen unterwirft ohne zusätzliches Läuterungssystem zu dem Gemisch zuzusetzen.